Europäisches Patentamt

European Patent Office

Office européen des brevets

(19)

(11) Publication number: **0 055 027**
**A2**

(12) **EUROPEAN PATENT APPLICATION**

(21) Application number: **81305477.2**

(22) Date of filing: **19.11.81**

(51) Int. Cl.³: **G 01 J 1/44**

(30) Priority: **08.12.80 GB 8039316**

(43) Date of publication of application: **30.06.82**
**Bulletin 82/26**

(84) Designated Contracting States: **BE DE FR IT NL**

(71) Applicant: **WILJ INTERNATIONAL LIMITED, Kingsnorth Industrial Estate, Ashford Kent TN23 2LW (GB)**

(72) Inventor: **Nixon, Dennis William, 30 Aragon Close, Ashford Kent (GB)**

(74) Representative: **Wright, Peter David John et al, R.G.C. Jenkins & Co. 53-64 Chancery Lane, London WC2A 1QU (GB)**

(54) **Apparatus for deriving an electrical signal from a radiation flash and instruments incorporating such apparatus.**

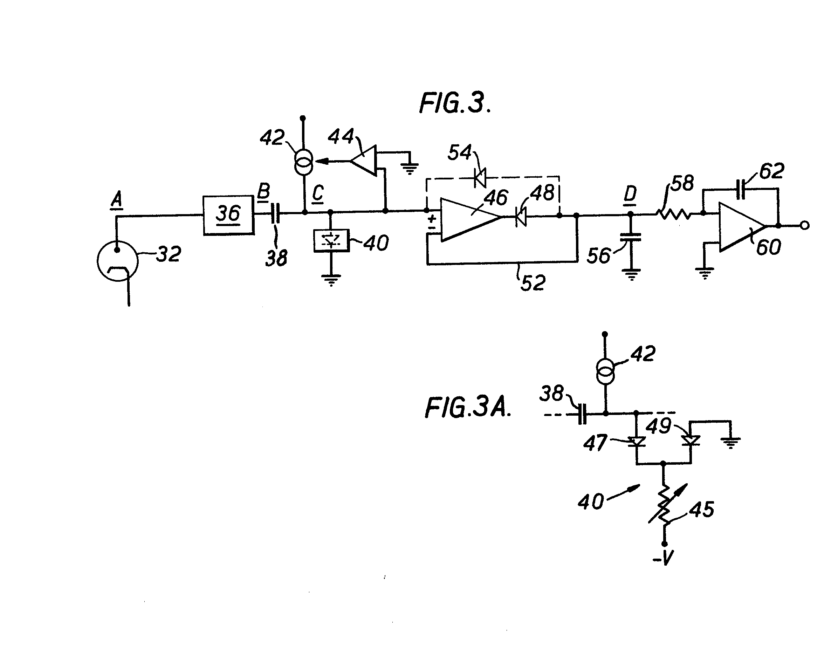

(57) Apparatus for deriving from at least one flash of radiation a signal representative of the quantity of radiation contained in the flash or flashes, the apparatus comprising a radiation detector (32) for receiving said flash of radiation and providing an electrical detector output signal (A) which includes a pulse generated in response to said flash, and processing means (36 to 62) arranged to receive said detector output signal and to provide said representative signal, the processing means being operative to substantially remove, in the representative signal, the effect of any D.C. component on which the pulse or pulses may have been superimposed in the detector output signal. In one embodiment (Fig. 3), the processing means operates by filtering the detector output signal and passing only its A.C. components. In another embodiment, the signal level in the absence of flashes is measured, the signal level in the presence of flashes is measured, and the measurements are subtracted.

- 1 -

APPARATUS FOR DERIVING AN ELECTRICAL SIGNAL FROM
A RADIATION FLASH AND INSTRUMENTS INCORPORATING
SUCH APPARATUS

This invention relates to apparatus for deriving from at least one flash of radiation an electrical signal representative of the quantity of radiation contained in the flash or flashes, and to instruments in which such apparatus is employed.

The invention has particular application to spectrofluorimeters and similar instruments in which a sample of a material to be analysed is subjected to a flash of radiation from a suitable radiation source, such as a Xenon-filled discharge lamp, and in response generates a flash of induced fluorescent radiation which is detected by a radiation detector. The invention is primarily concerned with measurement of this induced flash, but may also be applied to direct measurement of the flash from the source if desired, as will become apparent. Further, the invention may be applied generally to the measurement of received radiation flashes in other types of instrument.

In spectrofluorimeters, the levels of fluorescence involved are commonly very small and the quantity of

- 2 -

radiation in a single induced flash is correspondingly small. Consequently, in order to make an accurate measurement of the induced fluorescent radiation, the output signal of the radiation detector has been integrated throughout a substantial number of flashes. However, this in turn presents a further problem because typically the duration of each flash is very much shorter than the duration of the interval between successive flashes, the detector output signal in response to each flash is very small, and consequently the existence of any undesired signal levels during that relatively long interval produces substantial error in the eventual measurement as a result of the integration process. Such undesirable signal components may arise from the dark current of the detector employed, normally a photomultiplier tube, the effect of stray light upon the detector, the presence of phosphorescence in the sample being analysed, and other noise.

One approach to this problem has been described in British Patent Specification No. 1,533,242 where the technique employed is to effectively open-circuit the output of the radiation detector except during those periods when it is receiving a flash of fluorescent radiation of the sample. However, this involves the use of switching devices in the output path from the radiation detector,

- 3 -

which have to be operated in synchronism with the flashing of the radiation source, so that a synchronisation arrangement must be provided.

The output signal in response to each flash of fluorescent radiation will also vary with any variation in the intensity of the excitation flash generated by the radiation source, and to compensate for this it is known to provide a reference channel within which intensity of the source flashes is measured directly, as well as a measurement channel in which the flashes derived from the sample are measured, and then to ratio the outputs of the two channels. Such techniques are described both in the above-mentioned British Patent Specification No. 1,533,242 and in British Patent Specification No. 1,370,300.

The present invention seeks to provide apparatus which can separate the desired signal representative of quantity of radiation contained in a flash applied to a radiation detector, from the other and undesired components of the detector output signal which may be caused by factors already mentioned above, to achieve this improvement while eliminating the need for any means for synchronising switching in the output channel with the operation of the radiation source.

The invention provides apparatus for deriving from at least one flash of radiation a signal representative of the quantity of radiation contained in the flash or flashes, the apparatus comprising a radiation detector for receiving said flash of radiation and providing an electrical detector output signal which includes a pulse generated in response to said flash, and processing means arranged to receive said detector output signal and to provide said representative signal, the processing means being operative to substantially remove, in the representative signal, the effect of any D.C. component on which the pulse or pulses may have been superimposed in the detector output signal.

Two particular embodiments will be described. In one, the processing means includes filtering means for receiving said detector output signal at an input thereof and passing to an output thereof only A.C. components of said signal, whereby a filter output pulse occurs in response to a detector output signal pulse, and means for holding the output of said filtering means substantially at a predetermined reference level in the absence of an output pulse from the filtering means.

The filtering means in this case operates in respect of each individual pulse to remove unwanted signal components which are of a constant, or at any rate slowly-varying, kind such as dark current, stray light and sample phosphorescence, and by holding the output of the filtering means substantially at a predetermined reference level in the absence of an output pulse from the filtering means further errors which could arise from circuit drift, and which would be serious in view of the normal requirement to integrate the detector output signal, are avoided.

In a further embodiment, the processing means is operable to subtract, from the detector output signal value occurring when one or more flashes are received, or from a signal value derived therefrom, the detector output signal value occurring when no flashes are received, or a signal value derived therefrom, to substantially remove the effect of any said D.C. component.

This operates on the basis that to a reasonable approximation the unwanted signal level during a flash will be the same as that in the absence of a flash, and that by deducting the latter from the total signal level during a flash a substantially accurate representation of the quantity of radiation contained in the flash is achieved. In the embodiment as described below, this is not done in respect of individual flashes, but rather the processing means is operable to integrate the detector output signal, or a signal derived therefrom, throughout a time period during which a succession of flashes are received, and throughout a time period when flashes are

not received, and to subtract one integral from the other. Consequently, although a truly representative signal is not achieved for each flash, nevertheless a signal representative of the total quantity of radiation in the succession of flashes is derived at the stage when the integrals are subtracted.

However, it should be appreciated that the apparatus may be arranged such as to subtract measurements taken, say, alternately during and between successive flashes to produce signals accurately representing each individual flash, which may then if desired be integrated, or to integrate the during-flash measurements and the between-flash measurements sepately, then subtract the integrals.

A further feature applicable to both embodiments, and which is considered to be patentable in itself, is to derive from the output pulse of the radiation detector, a signal which is lengthened as compared with the output pulse, as well as its amplitude being dependent upon the amplitude of the output pulse, so that the time integral of the individual modified pulses is increased. At very low signal levels, this enables the design of the integrating circuitry to be improved as compared with what would otherwise be required. Such an arrangement has further advantages which will be apparent from the detailed description below.

In order that the invention may be more clearly understood, an embodiment thereof will now be described, by way of example, with reference to the accompanying drawings in which:

Figure 1 shows diagrammatically a spectro-fluorimeter embodying the present invention,

Figure 2 demonstrates the technique of integrating detector outputs not only when flashes are present, but also when they are not,

Figure 3 shows in more detail circuitry in accordance with the invention incorporated in the reference and measurement channels of the Figure 1 embodiment,

Figure 3A shows an example of a clamping circuit for use in the Figure 3 arrangement,

Figure 4 shows waveforms useful in understanding the operation of Figure 3, and

Figure 5 shows alternative circuitry for use in the reference and measurement channels of Figure 1.

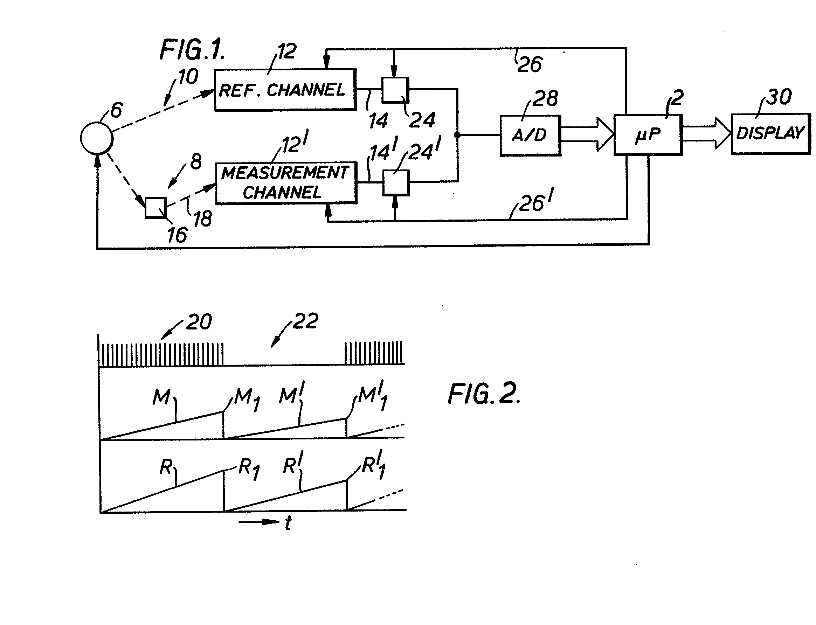

Referring to Figures 1 and 2, a microprocessor 2 is programmed so as to deliver in operation control signals via a line 4 causing a radiation source 6, such as a Xenon-filled gas discharge lamp to flash at intervals. By way of example, the intervals may be of the order of 15 ms. and the duration of each radiation flash may be of the order of 10 microseconds.

A measurement optical path 8 and a reference optical path 10 are defined by suitable optical components

- 8 -

forming no part of the present invention, in any manner which is suitable, such being known. Each flash of radiation on the reference path 10 is received by a reference channel 12 and converted to a corresponding electrical pulse signal which appears at the output 14 of that channel. On the measurement optical path 8, each flash of radiation from source 6 is incident upon a sample indicated at 16. In the case of a spectro-fluorimeter, this causes the sample 16 to emit a corresponding flash of fluorescent radiation 18 which is received by the measurement channel 12' and converted to a corresponding electrical pulse signal at the output 14' of that channel. It will be appreciated that the geometry of the measurement optical path is such that the measurement channel 12' cannot receive any radiation direct from source 6, but only radiation which has emanated from the sample 16. Filters may be placed in the optical paths to restrict measurement to a desired wavelength band.

Microprocessor 2 is programmed so as to cause source 6 to generate a succession of a predetermined number (for example 48) of flashes as illustrated at 20 in Figure 2, and then hold the source 6 inactive during an equal period of time illustrated at 22, and then to repeat this cycle a predetermined number of times, for example 10 times.

The reference and measurement channels 12 and 12' contain integrating circuitry, as will be explained further below, so that the quantities of radiation in the reference and measurement flashes received are progressively integrated throughout the duration of the initial succession of pulses 20, as indicated approximately by the ramp waveforms R (reference) and M (measurement) in Figure 2, to the final integrated values indicated at $M_1$ and $R_1$ at the end of the succession of pulses 20. Microprocessor 2 is programmed so as to then open a gate 24' by means of a control signal on line 26' to gate the integral output signal $M_1$ from output 14' to analogue-to-digital converter 28, the output of which is then stored in digital form in microprocessor 2, the integrator of measurement channel 12' being also reset to zero by means of the control signal on line 26'. Next, microprocessor 2 causes the integral output $R_1$ on line 14 to be similarly converted to digital form and stored in the microprocessor by means of a control signal on line 26 operating gate 24 and, also, resetting of the integrator in reference channel 12.

Next, during interval 22, the reference and measurement channels 12 and 12' again carry out their integrating function but without flashes being generated by source 6. Consequently, the integrated outputs build up as indicated at M' and R' to final values $M'_1$ and $R'_1$ indicative of the amount of unwanted signal, whether optical or electrical in origin, which has been developed in each of the two channels during the time period 22. These values are then transferred through to the microprocessor 2 in the manner which has already been described, and the microprocessor then computes the value:

$$\frac{M_1 - M_1'}{R_1 - R_1'}$$

On the assumption that the amounts of unwanted signal occurring in each channel were identical during time periods 20 and 22, the lowerline of this expression will represent the integrated amount of radiation received in reference channel 12 during time period 20 due solely to radiation flashes from source 6, and the top line would represent the integrated amount of fluorescent radiation 18, received solely from the sample 16, the ratio between the two then representing the degree of fluorescent activity of the sample 16 after taking into account the effect of the fluctuations in intensity of the radiation output from source 6.

By repeating the above cycle of operations and averaging the results, a number of times, the accuracy of the final measurement can be improved and the microprocessor 2 is programmed so as to carry out the cycle a predetermined number (for example 10) of times, sum the results, divide by the total number of flashes in that number of cycles and then display the final average on a display unit 30.

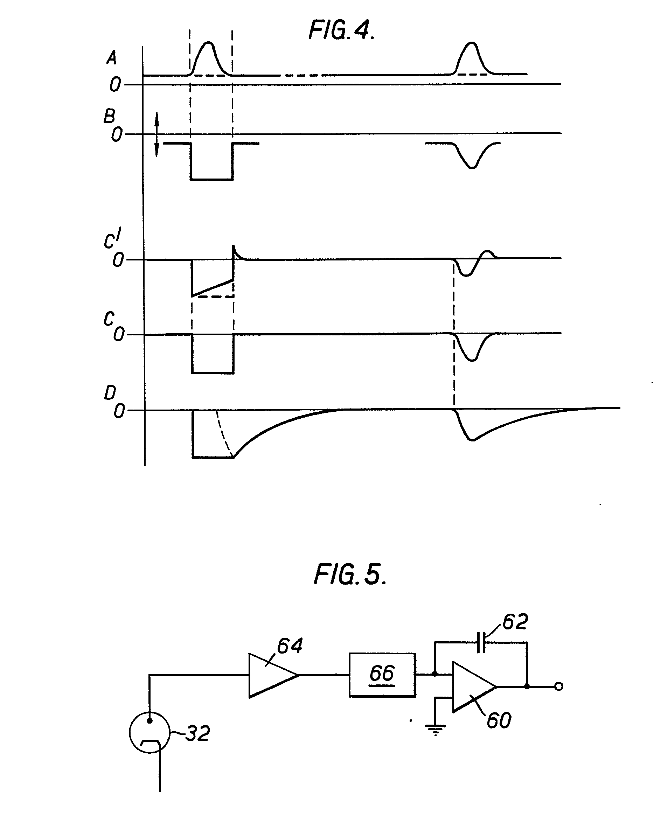

Turning now to Figures 3 and 4, the operation of the detecting and integrating circuitry within each of the channels 12 and 12' will be described. The objective of this circuitry is to ensure, so far as is possible, that the integral values $M_1$, $R_1$, $M'_1$ and $R'_1$ are contributed to only by signals which accurately represent pulses of radiation which have originated from source 6 and travelled along the prescribed reference optical path to the detector of channel 12, and pulses of fluorescent radiation which have been stimulated from sample 16 and travelled along radiation path 18 to the detector of measurement channel 12'. If this could be achieved to perfection, then the compensating integration step performed during time period 22 as described with reference to Figure 2 would not be necessary. In fact, of course, such perfection cannot be achieved and the process described with reference to Figure 2 assists in removing any errors which would still be present despite the circuitry of Figure 3 having improved the quality of integrated signal values, in each of the channels.

The circuitry of Figure 3 is present in each of the channels 12 and 12'. At the input end of the channel is a photomultiplier tube 32 arranged to receive the flash of radiation either direct from the source 6 or from the sample 16. Its output pulses, in response to the received radiation flashes, are illustrated in waveform A of Figure 4 where it can be seen that the complete output signal also includes a substantially D.C. component, of relatively low level, to which dark current in the photomultiplier tube, stray light, and in the case of the measurement channel, phosphorescence of the sample, may contribute. This signal is applied to amplifier 36 to whose output a capacitor 38 is series-connected. The further discussion of the processing of the output pulses of waveform A will be done as though they were square pulses, with reference to the left-hand side of Figure 4, for the sake of simplicity, but in essence the same considerations will apply to the pulses in their true form, which are shown for completeness at the right-hand side of Figure 4. The pulse having waveform B at the output of amplifier 36 will be a true reproduction of the pulse of waveform A, but it is not referenced to any particular voltage level. This waveform is transferred through capacitor 38 with good accuracy of form, but at the output side of capacitor 38 it is important that the pulse should be referenced accurately to a predetermined level in view of the fact that the signal at this point will in due course be integrated. Assuming that at this point the pulse is negative-going, a clamping circuit 40 is employed, which behaves as though it were a perfect diode orientated as shown in Figure 3. This alone would prevent the output side of capacitor 38 from going positive, but could not prevent it from drifting negative relative to zero volts. For this, a current source 42 is provided to supply a current at least sufficient to compensate for the maximum voltage drift rate on capacitor 38. Any current (and at times this may be the entire current) surplus to that needed to keep the capacitor voltage up to zero simply flows away through circuit 40. This arrangement clamps the output of capacitor 38 to ground and holds the base line of the output pulse substantially at zero volts as illustrated in waveform C' of Figure 4.

However, the current supplied from source 42 tends to discharge capacitor 38 towards zero volts throughout the duration of the pulse, thus deforming the pulse as shown by the difference between the solid and broken lines in waveform C'. Also, on termination of the pulse, because the capacitor 38 has been partially discharged the voltage on its output side swings beyond zero for a very brief period during which the capacitor

- 14 -

discharges through circuit 40.  Both effects are undesirable.

Further correction is achieved by employing a
comparator 44 one of whose inputs is connected to circuit
40 and the other of whose inputs is connected to ground.
The output of the comparator is employed to control
the amount of current being provided by the current source
42.  When comparator 44 senses the presence of a pulse from
capacitor 38, it reduces the current from source 42 to
a low level, or possibly zero, so that distortion of the
pulse waveform by such current, as illustrated at C' is
avoided and the top of the pulse remains square, or very
substantially so.  Termination of the pulse is also sensed
by the comparator, the output of which then re-adjusts
the current source 42 to provide current to circuit 40 thereby holding its "anode" accurately at zero volts.  Consequently,
the pulse remains substantially undeformed and its base-line
remains accurately referenced to zero volts as shown at
waveform C in Figure 4.  It will be appreciated that the
above process eliminates the D.C. component on which the
original pulse A was superimposed and hence the results of
the subsequent integration will be substantially improved.

An example of a passive clamping circuit 40 is
shown in Figure 3A.  A variable resistor 45 is set so
that the current through it is twice the current normally
delivered by source 42.  The circuit will then operate to hold the anode of diode 47 at the same voltage as that applied to the anode of diode 49 (in the illustrated example, zero volts). Various other circuits, including active circuits, are known for similarly acting as perfect diodes.

The next circuit section consists of an operational amplifier 46 to the non-inverting input of which the signal from capacitor 38 is applied, diode 48 and a feedback loop 52 from diode 48 to the inverting input of amplifier 46. This arrangement functions as a substantially perfect diode and to facilitate explanation, a diode is illustrated at 54, which will be assumed to be perfect, and the equivalent of components 46, 48 and 52. Negative-going pulse C is transmitted through diode 54 and charges a capacitor 56 to a voltage equal to the amplitude of pulse C. The voltage on capacitor 56 remains at this level throughout the duration of pulse C as can be seen from waveform D in Figure 4. On termination of the pulse, diode 54 becomes reverse-biased and capacitor 56 can discharge only through a resistor 58 and the input of integrating amplifier 60, so that it takes a substantial period of time to completely discharge. During this time, the waveform D is being applied as the input signal to the integrating amplifier 60, which is provided with capacitor 62 in its negative feedback path, so that the integral of the input signal will be substantially greater than it would have been had pulse C been applied to the input of the amplifier 60, owing to the effective lengthening of pulse C by the preceding stage of the circuitry.

This pulse-stretching arrangement has two advantages. First, when an integrating amplifier is required to operate on small-amplitude brief-duration input signals, there is a conflict between the desirability of a short time constant in order to produce a substantial change in output signal in response to the relatively small input signal, and the fact that the shorter the time constant is made, the greater becomes the effect on the output signal of the small leakage currents which are present at all times in circuitry of this kind. By lengthening the input pulse, a given change in output can be achieved while using a longer time constant, and hence the error caused by leakage current can be made smaller in relation to the integrated output signal. The permitted increase in time constant is achieved by increasing the size of capacitor 62. The second advantage is that the A.C. coupling of amplifier 36 permits a certain amount of A.C. noise, having a non-zero mean level, to be superimposed on the waveform at point C. In the absence of the pulse-lengthening circuit, this signal would be present at point D except when pulse C was present and hence would be contributing to the integrated output signal most of the time. By lengthening the negative-going pulse present at point D, diode 54 is rendered non-conductive throughout the duration of the lengthened pulse and hence the time for which the noise signal may be present at point D is reduced. In fact, the circuit components may be chosen so that pulse D occupies half or even more of the interval between pulses, thereby suppressing a very substantial part of the noise which might otherwise be present at the integrator input.

The operation of the pulse-lengthening circuit in more detail is as follows. When a negative pulse arrives at the non-inverting input of amplifier 46 its output goes negative and capacitor 56 is charged negative through forward-biased diode 48. Because feedback loop 52 starts from the anode of diode 48, the voltage required to forward bias diode 48 is automatically compensated for and does not reduce the voltage developed on capacitor 56, as it would in the absence of the amplifier and loop 52. When the negative pulse finishes, the voltage on capacitor 56, via loop 52 and amplifier 46, holds the diode 48 fully non-conductive until that voltage has decayed.

Figure 5 shows alternative circuitry for use in channels 12 and 12'. As compared with Figure 3, the A.C. coupled amplifier and its output clamping circuit are omitted and replaced by a D.C. amplifier 64. Its
output is coupled directly to pulse-lengthening circuit
66 which may be the same as circuit 46, 48, 52, 56,
58 of Figure 3 which as before is connected to integrating
amplifier 60, 62. Since amplifier 64 will not filter
out D.C. components of its input signal, these will
contribute to the eventual integrated output signal
of amplifier 60, 62 ($M_1$ in Figure 2). This would be a
source of very substantial error in view of the length of
the dark intervals compared with the flashes. It is
therefore necessary to compensate by integrating also.
throughout an interval 22 in which flashes are absent,
as already described with reference to Figure 2, and
subtract the integrals, in order to eliminate the effect
of the unwanted D.C. component. It should be noted that,
whereas in the Figure 3 embodiment the technique of
measuring during flash-free periods as well as flash-
containing periods, and subtracting, is a refinement
(assisting primarily in eliminating the effects of photomultiplier noise which may be present at the integrator
input, and also of amplifier offsets which vary with time,
temperature and humidity) to add further accuracy to that
already achieved by the use of an A.C. coupled amplifier,
in the Figure 5 embodiment that technique is basic to
the removal of any unwanted D.C. component on which the pulses are superimposed.

In both cases the inclusion of the pulse lengthening circuit is desirable for added accuracy, but not essential.

The invention has been described in detail with reference to analogue signal-handling techniques up as far as the output of integrating amplifier 60. It should be realised, though, that digital hardware/software may be employed to sample, digitise and sum the output signals instead, and references to integration should be understood accordingly where used herein. Further, suitable digital hardware/software may be employed to carry out functions equivalent to those of the circuits described right back to the output of the photomultiplier 32, whose output signal can be sampled and the sample values recorded in digital terms, the separation of the pulses from the underlying D.C. level then being performed by appropriate manipulation of the digital values thus obtained.

It is also mentioned that an alternative source of radiation as an origin for the measured flashes would be a continuously operated tungsten/halogen lamp combined with a shutter or chopper or the equivalent to direct light from the source only intermittently on to the sample, or into the reference channel input.

- 1 -

CLAIMS:

1. Apparatus for deriving from at least one flash of radiation a signal representative of the quantity of radiation contained in the flash or flashes, the apparatus comprising a radiation detector (32) for receiving said flash of radiation and providing an electrical detector output signal (A) which includes a pulse generated in response to said flash, and processing means (38 to 62) arranged to receive said detector output signal and to provide said representative signal, characterised in that the processing means is operative to substantially remove, in the representative signal, the effect of any D.C. component on which the pulse or pulses may have been superimposed in the detector output signal.

2. Apparatus as claimed in claim 1, characterised in that the processing means includes filtering means (38) for receiving said detector output signal at an input thereof and passing to an output thereof only A.C. components of said signal, whereby a filter output pulse occurs in response to a detector output signal pulse, and means (40, 42) for holding the output of said filtering means substantially at a predetermined reference level in the absence of an output pulse from the filtering means.

- 2 -

3. Apparatus as claimed in claim 2, characterised in that said processing means includes means (60,62) for integrating the signal at said filtering means output, or a signal derived therefrom.

4. Apparatus as claimed in claim 2 or claim 3, characterised in that said holding means comprises unidirectionally conductive means (40) coupled to the output of the filtering means.

5. Apparatus as claimed in claim 4, characterised in that said holding means further comprises biassing means (42) for maintaining said unidirectionally conductive means in a conductive state.

6. Apparatus as claimed in claim 4 or 5, characterised in that said biassing means is a current source.

7. Apparatus as claimed in claim 5 or claim 6, characterised in that said holding means further comprises a sensing circuit (44) arranged to sense the presence of an output pulse at said filtering means output and in response to suppress operation of said biassing means.

- 3 -

8.   Apparatus as claimed in claim 7, characterised in that said sensing circuit (44) is a comparator arranged to compare the output voltage of said filtering means with said predetermined level to sense the presence of said output pulse.

9.   Apparatus as claimed in any one of claims 2 to 8, characterised in that the filtering means comprises at least one capacitor (38) in series connection between its input and its output.

10.  Apparatus as claimed in claim 1, characterised in that said processing means is operable (2) to subtract, from the detector output signal value occurring when one or more flashes are received, or from a signal value derived therefrom, the detector output signal value occurring when no flashes are received, or a signal value derived therefrom, to substantially remove the effect of any said D.C. component.

11.  Apparatus as claimed in claim 10, characterised in that said processing means is operable to integrate the detector output signal, or a signal derived therefrom, throughout a time period (20) during which a succession of flashes are received, and throughout a time period (22) when

- 4 -

flashes are not received, and to subtract one integral from the other.

12. Apparatus as claimed in claim 10 or claim 11, characterised in that the detector output is applied to the processing means through a D.C. amplifier (36).

13. Apparatus as claimed in claim 10, characterised in that the detector output signal value is repeatedly sampled, during and between flashes, and individual sample values are subtracted.

14. Apparatus as claimed in claim 10, characterised in that the detector output signal value is repeatedly sampled, during and between flashes, the sample values taken during flashes and the sample values taken between flashes are integrated separately, and the integrals are subtracted.

15. Apparatus as claimed in any one of claims 2 to 9, characterised in that said processing means is operable to subtract, from the filtering means output signal value occurring when one or more flashes are received, or from a signal derived therefrom, the filtering means output signal value occurring when no flashes are received

0055027

- 5 -

or a signal derived therefrom.

16. Apparatus as claimed in claim 15, characterised in that said processing means is operable to integrate the filtering means output signal, or a signal derived therefrom, throughout a time period (20) during which a succession of flashes are received, and throughout a time period (22) when flashes are not received, and to subtract one integral from the other.

17. Apparatus as claimed in claim 15, characterised in that the filtering means output signal value is repeatedly sampled, during and between flashes, and individual sample values are subtracted.

18. Apparatus as claimed in claim 15, characterised in that the filtering means output signal value is repeatedly sampled, during and between flashes, the sample values taken during flashes and the sample values taken between flashes are integrated separately, and the integrals are subtracted.

19. Apparatus as claimed in claim 11 or claim 16, characterised in that said processing means comprises a single integrator for deriving both integrals, and two storage means, one of the integrals derived by the integrator is stored in one of the storage means and the other of the integrals is stored in the other of the storage means.

20. Apparatus as claimed in claim 11, 12, 16 or 19, characterised in that it comprises means (46 to 56) for lengthening pulses in the signal to be integrated, prior to their integration.

21. Apparatus as claimed in claim 20, characterised in that the lengthening means comprises a capacitive circuit (56) which is charged in proportion to the amplitude of the pulse it receives, and which has a discharge time constant which is substantially longer than the duration of said pulse.

22. An instrument comprising a radiation source (6), means (2) for causing the source to emit flashes of radiation, reference (10) and measurement (8) optical paths leading to respective reference (12) and measurement (12') channels and characterised in that the reference channel (12) comprises a first apparatus as claimed in any preceding claim having its radiation detector arranged to receive said flashes of radiation from the reference optical path, and the measurement channel (12') comprises a second such apparatus having its radiation detector arranged to receive said flashes of radiation, or flashes of radiation derived therefrom by a sample under measurement, from the measurement optical path.

23. An instrument as claimed in claim 22, characterised in that said apparatus are in accordance with any one of claims 11, 14, 16, 18 or 19, and comprising means for deriving the ratio of the difference between the two integrals from one channel and the difference between the two integrals from the other channel.

FIG.1.

FIG.2.

FIG.3.

FIG.3A.

FIG.4.

FIG.5.